# EUROPÄISCHE PATENTSCHRIFT

(11) **EP 1 414 909 B1**
(45) Veröffentlichungstag und Bekanntmachung des Hinweises auf die Patenterteilung: **13.10.2004**
(21) Anmeldenummer: 02767228.6
(22) Anmeldetag: 18.07.2002
(51) Int. Cl.: C08L 101/10, C08K 5/54, C08K 5/544

(54) **ALKOXYVERNETZENDE EINKOMPONENTIGE FEUCHTIGKEITSHÄRTENDE MASSEN**
ALCOXY CROSS-LINKING, SINGLE-COMPONENT, MOISTURE-HARDENING MATERIALS
MATIERES A DURCISSEMENT HUMIDE A UNE SEULE COMPOSANTE ET A RETICULATION ALCOXY

(30) Priorität: 09.08.2001 DE 10139132
(43) Veröffentlichungstag der Anmeldung: 06.05.2004
(73) Patentinhaber: Consortium für elektrochemische Industrie GmbH, 81379 München (DE)
(72) Erfinder: SCHINDLER, Wolfram, 84577 Tüssling (DE); BAUER, Andreas, D - 84375 Kirchdorf (DE); STANJEK, Volker, 81479 München (DE); PACHALY, Bernd, 84561 Mehring-Öd (DE)
(74) Vertreter: Fritz, Helmut, Dr.
(86) Internationale Anmeldenummer: PCT/EP2002/008019
(87) Internationale Veröffentlichungsnummer: WO 2003/014226

(56) Entgegenhaltungen:
- EP-A- 0 011 782
- EP-A- 0 206 301
- EP-A- 0 370 464
- EP-A- 0 744 443
- EP-A- 0 807 660
- EP-A- 0 967 246
- EP-A- 1 104 787
- US-A- 5 990 257

## Beschreibung

Die Erfindung betrifft alkoxyvernetzende einkomponentige Dichtstoffmassen auf Basis Alkoxyorganosilan-terminierten Polymeren mit hervorragender Lagerstabilität und Härtungscharakteristik.

Organische Polymere mit Silanendgruppen in Form von einkomponentigen mit Luftfeuchtigkeit aushärtenden Massen (RTV-1) sind bekannt und werden vielfach zur Herstellung von elastischen Dicht- und Klebstoffen verwendet. Derartige Polymere können aus unterschiedlichen Bausteinen aufgebaut sein. Üblicherweise sind dies Polyurethane, Polyether, Polyester, Polyacrylate, Polyvinylester, Ethylen-Olefincopolymere, Styrol-Butadiencopolymere oder Polyolefine. Es ist bekannt, dass zur Stabilisierung bei der Verarbeitung und Lagerung der Compounds diesen einkomponentigen Massen niedermolekulare Verbindungen zugesetzt werden, die über hydrolysierbare Gruppen verfügen, die eine höhere Reaktivität gegenüber Wasser als die silanterminierten Polymere haben.
Die Menge an zugesetzten Wasserfängern richtet sich nach dem Wassergehalt der Bestandteile der Rezeptur und nach den gewünschten Lagerstabilitäten und Verarbeitungszeiten. Meist sind dies organofunktionelle Silane, wobei der organische Rest vielfach ausschlaggebend für die Reaktivität ist. Beispiele für solche Silane sind Vinyltrimethoxysilan, Alkylaminopropyltrimethoxysilane aber auch beispielsweise unter Bildung von Ammoniak wasserbindende Silane wie Hexamethyldisilazan.

Meist werden für die Endterminierung substituierte Propyltrimethoxysilane eingesetzt, da sie in der Regel günstig verfügbar sind und in den Massen eine sehr gute Reaktivität aufweisen. Allerdings sind diese Polymere, bedingt durch die hohe Reaktivität auch problematisch hinsichtlich der Verarbeitung, z.B. bei der Einarbeitung von wasserhaltigen Füllstoffen oder auch Additiven, die die Reaktivität weiter erhöhen, ferner sind die Lagerstabiltäten vielfach unzureichend.
Beispielsweise kann der Zusatz von größeren Mengen an Aminosilanen als Haftvermittler die Lagerstabilität stark verringern. Die Massen müssen meist über weitere Zusatzkomponenten, wie beispielsweise die in DE-A-19923300 beschriebenen Phosphorsäureester, stablisiert werden, um die Katalysatoraktivität zu moderieren. Auch der Zusatz von Standard-Wasserfängern wie Vinyltrimethoxysilan ist nur bedingt geeignet um die Massen zu stabilisieren.

Analog zu den bereits oben beschriebenen organischen Polymeren sind auch Polydiorganosiloxane mit hohen Reaktivitäten bekannt. In US-A-5254657 werden feuchtigkeitshärtende Massen auf Silicon-Basis beschrieben, bei denen die vernetzbaren Silaneinheiten analog zu den organischen Polymeren über die Umsetzung eines Aminosilicons mit einem Isocyanatoalkylalkoxysilan hergestellt werden. Auch diese zeigen aufgrund der hohen Reaktivität der Silanendgruppen eine problematische Lagerstabilität.

EP-A-0 807 660 offenbart härtbare Harzzusammensetzungen enthaltend (a) ein Oxyalkylen-Polymer mit mindestens einer Silizium-enthaltenden Reaktivgruppe und (b-1) einer Amino- und Trialkylsiloxygruppe enthaltenden Verbindung oder (b-2) einem bestimmten Silylamin-Derivat.

Gegenstand der Erfindung sind alkoxyvernetzende einkomponentige Massen, die
(A) alkoxysilanterminiertes Polymer mit Endgruppen der allgemeinen Formel (1)

   -A-Si(R)ₐ(CH₃)₃₋ₐ (1)

   und
(B) Silan, das ausgewählt wird aus Silanen der allgemeinen Formeln (2) bis (4)

   X-CH₂-Si(R)ₐ(CH₃)₃₋ₐ (2)

   R''N[CH₂-Si(R)ₐ(CH₃)₃₋ₐ]₂ (3)

   N[CH₂-Si(R)ₐ(CH₃)₃₋ₐ]₃ (4)
enthalten, wobei
- **A**: ein zweibindiger gegebenenfalls halogensubstuierter Kohlenwasserstoffrest mit 1 bis 18 C-Atomen,
- **R**: eine Methoxy- oder Ethoxygruppe,
- **X**: eine Gruppe R''O-, R"NH- oder Halogen,
- **R"**: Wasserstoff, einen gegebenenfalls halogensubstuierten cyclischen, linearen oder verzweigten C₁₋₁₈-Alkyl- oder C₆₋₁₈-Arylrest, oder ein Rest R'-O-CO- oder R'-NH-CO-,
- **R'**: einen gegebenenfalls halogensubstuierten C₁₋₈-Kohlenwasserstoffrest und
- **a**: eine ganze Zahl von 1 bis 3 bedeuten.

Die Massen auf Basis Alkoxyorganosilan-terminierter Polymere (A) weisen eine ausgezeichnete Lagerstabilität und Härtungscharakteristik auf. Es hat sich nämlich gezeigt, dass der Zusatz von Silanen der allgemeinen Formeln (2) bis (4) zu Polymeren (A) geeignet ist, derartige Massen mit einer verbesserten Lagerstabilität herzustellen, ohne einen negativen Einfluss auf die Härtungskinetik und die Durchhärtung der Materialien zu haben. Im Gegensatz zu den bisherigen Zusammensetzungen sind aufgrund der sehr hohen Reaktivität der Silane der allgemeinen Formel (2) bis (4) die Massen hinsichtlich der Verarbeitung ausreichend lange verarbeitbar ohne zu gelieren. Dabei kann die Verarbeitungszeit durch die zugesetzte Silanmenge eingestellt werden. Dadurch dass die Silane der allgemeinen Formel (2) bis (4) aber eine hinreichend hohe Reaktivität zeigen, sind die Hautbildungs- und Durchhärtungszeiten nur wenig abhängig von der Silanmenge. Damit können Massen hergestellt werden, die sehr gut gegen größere Wassermengen, welche z.B. aus den Füllstoffen bei der Lagerung austreten, stabilisiert sind, ohne die Härtungscharakteristik zu verschlechtern.

Die Herstellung von unterschiedlichen silanterminierten Polymeren (A) ist beispielsweise in US-A-3971751, EP-A-70475, DE-A-19849817, US-A-6124387 oder US-A-5990257 beschrieben. Unterschiedliche Produkte sind kommerziell verfügbar, wie MS-Polymer S203H und S303H (von Kaneka Corp.), Desmoseal® LS 2237 (Bayer AG), Polymer ST50 (Hanse-Chemie GmbH), Excestar® S2410 und S2420 (Asahi Glass), Permapol® MS (Courtaulds Coatings Inc.) oder WSP 725-80 (Witton Chemical Co.). Daneben sind auch weitere silanterminierte Polymere (A) mit organischen Polymergrundgerüst einsetzbar.

Die Polymere (A) enthalten vorzugsweise ein Grundgerüst aus Polyurethan, Polyether, Polyester, Polyacrylat, Polyvinylester, Ethylen-Olefincopolymer, Styrol-Butadiencopolymer oder Polyolefin. Besonders bevorzugt sind Polyether, Polyester, Polyurethane mit Molmassen Mn von 5000 - 50000, insbesondere 10000 - 25000. Die Viskositäten der Polymere (A) liegen vorzugsweise bei maximal 200 Pas, insbesondere maximal 100 Pas.

In den vorstehenden allgemeinen Formeln (1) bis (4) bedeuten bevorzugt:
- **R''**: Wasserstoff, einen cyclischen oder linearen C₁₋₆-Alkyl- oder C₆₋₁₀-Arylrest, speziell Butyl, Cyclohexyl oder Phenyl,
- **R'**: einen C₁₋₄-Alkyl- oder Phenylrest, speziell Methyl oder Ethyl,
- **A**: einen verzweigten oder linearen C₁₋₆-Alkylrest, insbesondere eine Methylen- oder eine Trimethylengruppe,
- **a**: die Werte 2 oder 3.

Zur Herstellung der silanterminierten Polymere (A) sind eine Vielzahl von Möglichkeiten bekannt, insbesondere:
- Copolymerisation von ungesättigten Monomeren mit solchen, die z.B. Alkoxysilylgruppen, wie Vinyltrimethoxysilan aufweisen.
- Aufpfropfung von ungesättigten Monomeren wie Vinyltrimethoxysilan auf Thermoplaste wie Polyethylen.
- Die Addition von H-Silanen wie Methyldimethoxysilan an die Kohlenstoff-Doppelbindungen unter Edelmetallkatalyse.
- Umsetzung von Organosilanen mit Präpolymeren. Hierbei wird eine funktionelle Gruppe des Präpolymeren mit einer funktionellen Gruppe des Silans umgesetzt.

Der vielfach beschrittene und einfachste Weg für den zuletzt genannten Fall ist eine Umsetzung von NCO-Gruppen eines Isocyanat-Präpolymeren mit einem Aminosilan der allgemeinen Formel (5):

R¹-NH-A-Si(R)ₐ(CH₃)₃₋ₐ (5)

Ferner können entsprechend OH-Gruppen eines Isocyanat-Präpolymers, aber auch von unterschiedlichsten anderen Polymergrundbausteinen wie z.B. reinen Polyethern mit einem Isocyanatosilan der allgemeinen Formel (6) umgesetzt werden:

OCN-A-Si(R)ₐ(CH₃)₃₋ₐ (6)

In den allgemeinen Formeln (5) und (6) bedeuten
- **R**^{**1**}: Wasserstoff oder einen gegebenenfalls mit Halogen substituierten Alkylrest mit 1 bis 18, insbesondere 1 bis 6 C-Atomen, oder Arylrest mit 6 bis 18, insbesondere 6 bis 10 C-Atomen,
- **A, R** und **a**: weisen die vorstehenden Bedeutungen auf.

Vorzugsweise bedeuten **A** Trimethylen, **R** Methoxy, **R**^{**1**} Phenyl oder einen linearen Alkylrest, wie Ethyl oder Butyl und **a** hat den Wert 3.

In einer bevorzugten Ausführungsform weist das alkoxysilanterminierte Polymer (A) Endgruppen der allgemeinen Formel (7),

-NR¹-CH₂-Si(R)ₐ(CH₃)₃₋ₐ (7)

auf.

Dieses kann analog zu den oben beschriebenen Verfahren hergestellt werden durch Umsetzung von NCO-Gruppen eines Isocyanat-Präpolymeren mit einem Aminosilan der allgemeinen Formel (8):

R¹NH-CH₂-Si(R)ₐ(CH₃)₃₋ₐ (8)

Ferner können entsprechend OH-Gruppen eines Isocyanat-Präpolymeren, aber auch von unterschiedlichsten anderen Polymergrundbausteinen wie z.B. reinen Polyethern mit einem Isocyanatosilan der allgemeinen Formel (9) umgesetzt werden.

OCN- CH₂-Si(R)ₐ(CH₃)₃₋ₐ (9)

In den allgemeinen Formeln (7) und (8) und (9) haben **R**^{**1**}**, R,** und **a** die vorstehenden Bedeutungen. Vorzugsweise bedeuten **R**^{**1**} Phenyl oder ein linearer Alkylrest wie Ethyl oder Butyl und **a** die Werte 2 oder 3.

Bei silanterminierten Polymeren (A) mit Endgruppen der allgemeinen Formel (7) hat sich gezeigt, dass diese aufgrund ihrer sehr hohen Reaktivität sehr schwierig nur noch compoundiert werden können. Dabei führt der Wassergehalt gängiger Füllstoffe und Additive vielfach bereits zu einem durchgelieren der Masse während der Compoundierung oder zu einer deutlichen Verstrammung, die zu meist kaum noch verarbeitbaren Massen führt. Ferner sind diese Massen hinsichtlich ihrer Lagerstabilität problematisch und können über längere Zeit nicht gelagert werden. Bei der Verarbeitung dieser RTV-1 Mischungen ziehen die Massen so schnell an, dass eine gleichmäßige Verarbeitung unmöglich ist. Der Versuch, diese Massen mit den oben beschriebenen Standard-Wasserfängern zu stabilisieren, führte zu keinem Erfolg.

Im Gegensatz zu den bisherigen Wasserfängern sind aufgrund der sehr hohen Reaktivität der Silane der allgemeinen Formel (2), (3) und (4), silanterminierte Polymere (A) nach der allgemeinen Formel (7) hinsichtlich der Verarbeitung ausreichend lange stabilisierbar ohne zu gelieren. Die Verarbeitungszeit kann auch hier durch die zugesetzte Silanmenge eingestellt werden. Allerdings sind die Verarbeitungszeiten und die Hautbildungs- und Durchhärtungszeiten deutlich schneller. Damit können nun auch lagerstabile schnelle RTV-1 Massen mit silanterminierten Polymeren (A) nach der allgemeinen Formel (7) hergestellt werden.

Als Polymere (A) können auch Polymere mit einem Grundgerüst aus Polydiorganosiloxan und Endgruppen der allgemeinen Formel (1) eingesetzt werden. Vorzugsweise werden dabei Silane der allgemeine Formel (6) an Hydroxyalkyl- oder Aminoalkylendständige Siliconöle addiert.

Gängige Siliconpolymere, hergestellt durch Endblockierung von Si-OH-terminierten Siliconölen mit alkoxyfunktionellen Silanen wie Vinyltrimethoxysilan oder Methyltrimethoxysilan sind als weitere Ausführungsform anstelle der Polymere (A) ebenso einsetzbar.

Als Komponente (B) sind organofunktionelle Silane der allgemeinen Formeln (2), (3) und (4) mit Methylenspacer einsetzbar. Beispiele für derartige Silane sind Aminomethyl-trimethoxysilan, Aminomethyl-methyldimethoxysilan, Bis-(trimethoxysilyl-methyl)amin, Aminomethyl-triethoxysilan, Aminomethyl-methyldiethoxysilan, Bis-(triethoxysilylmethyl)amin, Phenylaminomethyl-trimethoxysilan, Phenylaminomethyl-methyldimethoxysilan, Butylaminomethyl-trimethoxysilan, Butylaminomethyl-methyldimethoxysilan, Cyclohexylaminomethyl-trimethoxysilan, Cyclohexylaminomethyl-methyldimethoxysilan, Methoxymethyl-trimethoxysilan, Methoxymethyl-methyldimethoxysilan, Ethoxymethyl-triethoxysilan, Ethoxymethylmethyldiethoxysilan, Methylcarbamatomethyl-trimethoxysilan, Methylcarbamatomethyl-methyldimethoxysilan, Ethylcarbamatomethyl-triethoxysilan, Ethylcarbamatomethylmethyldiethoxysilan, Chlormethyl-trimethoxysilan und Chlormethyl-methyldimethoxysilan.

Bevorzugt sind dabei Aminomethyl-trimethoxysilan und Aminomethyl-methyldimethoxysilan besonders bevorzugt Phenylaminomethyl-trimethoxysilan, Phenylaminomethylmethyldimethoxysilan, Methoxymethyltrimethoxysilan und Methoxymethyl-methyldimethoxysilan, Methylcarbamatomethyl-trimethoxysilan, Methylcarbamatomethyl-methyldimethoxysilan, Ethylcarbamatomethyl-triethoxysilan, Ethylcarbamatomethylmethyldiethoxysilan, die aufgrund ihrer geringeren Basizität keinen zusätzlichen beschleunigenden Einfluss auf die Reaktivität haben.

Auf 100 Gewichtsteile Polymer (A) enthalten die Massen vorzugsweise 0,1 bis 20 Gewichtsteile, besonders bevorzugt 0,5 bis 10 Gewichtsteile, insbesondere 2 bis 6 Gewichtsteile Silane (B).

Die Massen können als Komponente (C) einen Katalysator zur Aushärtung enthalten. Als Komponente (C) können bevorzugt alle metallorganischen Katalysatoren eingesetzt werden, die bekanntermaßen die Silankondensation fördern. Dies sind insbesondere Zinnverbindungen und Titanverbindungen. Bevorzugte Zinnverbindungen sind Dibutylzinndilaurat, Dibutylzinndiacetat, Dibutylzinn-bis-acetylacetonat. Bevorzugte Titanverbindungen sind Alkyltitanate wie Tetraisopropyltitanat, Tetrabutyltitanat. Ferner können basische Amine als Cokatalysatoren aber auch soweit geeignet als Katalysator selbst eingesetzt werden. Bevorzugt sind beispielsweise Verbindungen wie 1,8-Diazabicyclo[5,4,0]undec-7-en oder 4-Dimethylaminopyridin. Ferner können auch organische Stickstoffverbindungen eingesetzt werden, die mindestens eine Silylgruppe tragen. Geeignete Basen mit einer Silylgruppe sind beispielsweise aminogruppenhaltige Silane wie Aminopropyltrimethoxysilan, Aminopropyl-triethoxysilan, Aminomethyl-trimethoxysilan, Aminomethyl-triethoxysilan, Aminoethylaminopropyl-trimethoxysilan, Butylaminopropyl-trimethoxysilan, Butylaminomethyl-trimethoxysilan, Cyclohexylaminomethyl-trimethoxysilan, Cyclohexylaminopropyl-trimethoxysilan.

Die Massen können ferner als Komponente (D) an sich bekannte Hilfsstoffe, wie Haftvermittler, Weichmacher, Füllstoffe, Thixotropiermittel, Lichtschutzmittel, Fungizide und Pigmente enthalten, die für den Einsatz in alkoxyvernetzenden einkomponentigen Massen bekannt sind.

Alle vorstehenden Symbole der vorstehenden Formeln weisen ihre Bedeutungen jeweils unabhängig voneinander auf. In allen Formeln ist das Siliciumatom vierwertig.

Die folgenden Beispiele dienen der Erläuterung der Erfindung ohne diese zu beschränken. Soweit nicht anders angegeben sind alle Mengen- und Prozentangaben auf das Gewicht bezogen, alle Drücke 0,10 MPa (abs.) und alle Temperaturen 20°C.

### Beispiele

### Herstellung von Isocyanatomethyl-trimethoxysilan:

Ausgehend von Chlormethyltrimethoxysilan wird Methylcarbamatomethyl-trimethoxysilan gemäß bekannter Verfahren (US 3,494,951) synthetisiert.
Dieses wird in ein Quarz-Pyrolyserohr, das mit Quarzwolle gefüllt ist, im Argon-Gasstrom eingepumpt. Die Temperatur im Pyrolyserohr beträgt zwischen 420 und 470°C. Das Rohprodukt wird am Ende der beheizten Strecke mit Hilfe eines Kühlers auskondensiert und gesammelt. Die farblose Flüssigkeit wird durch Destillation unter reduziertem Druck gereinigt. Über Kopf geht bei ca. 88-90°C (82 mbar) das gewünschte Produkt in über 99 %-iger Reinheit über, während im Sumpf das nicht umgesetzte Carbamat reisoliert werden kann. Dieses wird der Pyrolyse direkt wieder zugeführt.

Ausgehend von 56,9 g (273 mmol) Methylcarbamatomethyl-trimethoxysilan werden so 33,9 g (191 mmol) des gewünschten Produkts Isocyanatomethyl-trimethoxysilan in einer Reinheit > 97 % erhalten. Dies entspricht einer Ausbeute von 70 % d. Th.

### Herstellung von N-Phenylaminomethyl-trimethoxysilan:

537 g (5,77 mol) Anilin werden in einem Laborreaktor komplett vorgelegt und anschließend mit Stickstoff inertisieren. Man heizt auf eine Temperatur von 115 °C auf und tropft 328 g (1,92 mol) Chlormethyl-trimethoxysilan über 1.5 h zu und rührt für weitere 30 Minuten bei 125 - 130 °C nach. Nach einer Zugabe von ca. 150 g des Silans fällt vermehrt Aniliniumhydrochlorid als Salz aus, jedoch bleibt die Suspension bis zum Dosierende gut rührbar. Überschüssig eingesetztes Anilin (ca. 180 g) wird bei gutem Vakuum (62 °C bei 7 mbar) entfernt. Anschließend gibt man bei ca. 50 °C 350 ml Toluol zu und rührt die Suspension für 30 min bei 10 °C um Anilinhydrochlorid vollständig zu kristallisieren. Dieses wird anschließend abfiltriert. Das Lösungsmittel Toluol wird im Teilvakuum bei 60 - 70 °C entfernt. Der Rückstand wird destillativ gereinigt (89-91°C bei 0,16 mbar).
Es wird eine Ausbeute von 331 g, d.h. 75,9 % der Theorie, erreicht bei einer Produktreinheit von ca. 96,5 %. Das Produkt enthält etwa 3,5 % N,N-bis-[trimethoxysilylmethyl]-phenylamin als Verunreinigung.

### Herstellung von Methoxymethyl-trimethoxysilan:

340 g (6,3 mol) Natriummethylat (95 %ig) werden in einem mit Stickstoff inertisieren Laborreaktor in 2,5 l Methanol portionsweise gelöst. Dabei heizt sich die Lösung auf 65 °C auf. Anschließend tropft man 995 g (5,8 mol) Chlormethyl-trimethoxysilan über 1,5 h zu und rührt für weitere 30 Minuten in der Siedehitze. Bei der Zugabe des Silans fällt Natriumchlorid spontan als Salz aus, jedoch bleibt die Suspension bis zum Dosierende gut rührbar. Das ausgefallene Natriumchlorid wird abgesaugt und das Methanol im Teilvakuum bei 40 - 50 °C entfernt. Der Rückstand wird destillativ gereinigt (97-98°C bei 172 mbar).
Es wird eine Ausbeute von 678,0 g, d.h. 70,3% der Theorie, erreicht bei einer Produktreinheit von ca. 99,5 %.

### Beispiel 1 (Vergleichsbeispiel):

400 g eines Polypropylenglykols mit einem mittleren Molekulargewicht von 8000 g/mol werden mit 23,0 g Isophorondiisocyanat bei 100 °C innerhalb von 60 min. polymerisiert. Das erhaltene Polyurethanpräpolymer wird anschließend auf 60 °C abgekühlt und mit 12,8 g Phenylaminopropyltrimethoxysilan (erhältlich von CK-Witco unter Silquest® Y-9669) versetzt und 60 min gerührt, bis im IR-Spektrum keine Isocyanatbande mehr zu sehen ist.
Das so erhaltene silanterminierte Polymer wird bei ca. 25 °C mit 155 g Diisoundecylphthalat, 21,0 g 3-(2-Aminoethyl)-aminopropyltrimethoxysilan, 21,0 g Vinyltrimethoxysilan und 435 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Ein Teil der Paste wird mit einer Schichtdicke von 5 mm auf einer Teflonplatte aufgerakelt und unter Einwirkung der Luftfeuchtigkeit zu einem elastischen Gummi vernetzt. Dabei werden die Hautbildungszeiten (Tack-free-time) und die Durchhärtung des Probekörpers bestimmt (23°C / 50 % rel. Luftfeuchtigkeit).
Ein weiterer Teil der Paste wird in Aluminium-Kartuschen abgefüllt und 4 Tage bei 70 °C gelagert. Anschließend wird die Konsistenz geprüft und die Hautbildungszeiten (Tack-free-time) und die Durchhärtung wie oben beschrieben bestimmt. Die Kennwerte des Produkts sind in Tabelle 1 zusammengestellt.

### Beispiel 2:

Ein nach Beipiel 1 hergestelltes silanterminiertes Polymer wird bei ca. 25 °C mit 155 g Diisoundecylphthalat, 21,0 g 3-(2-Aminoethyl)-aminopropyltrimethoxysilan, 21,0 g Methoxymethyl-trimethoxysilan und 435 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 3:

Ein nach Beipiel 1 hergestelltes silanterminiertes Polymer wird bei ca. 25 °C mit 155 g Diisoundecylphthalat, 21,0 g 3-(2-Aminoethyl)-aminopropyltrimethoxysilan, 42,0 g Methoxymethyl-trimethoxysilan und 435 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 4:

Ein nach Beipiel 1 hergestelltes silanterminiertes Polymer wird bei ca. 25 °C mit 155 g Diisoundecylphthalat, 21,0 g 3-(2-Aminoethyl)-aminopropyltrimethoxysilan, 42,0 g Phenylaminomethyl-trimethoxysilan und 435 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 5 (Vergleichsbeispiel) :

300 g Desmoseal® LS 2237 (silanterminiertes Polyurethan, erhältich von der Bayer AG) werden bei ca. 25 °C mit 108 g Diisoundecylphthalat, 16,7 g 3-(2-Aminoethyl)-aminopropyltrimethoxysilan, 16,7 g Vinyltrimethoxysilan und 328 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.

Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 6:

300 g Desmoseal® LS 2237 werden bei ca. 25 °C mit 108 g Diisoundecylphthalat, 16,7 g 3-(2-Aminoethyl)-aminopropyltrimethoxysilan, 16,7 g Methoxymethyltrimethoxysilan und 328 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 7:

300 g Desmoseal® LS 2237 werden bei ca. 25 °C mit 108 g Diisoundecylphthalat, 16,7 g 3-(2-Aminoethyl)-aminopropyltrimethoxysilan, 33,4 g Methoxymethyltrimethoxysilan und 328 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 8:

300 g Desmoseal® LS 2237 werden bei ca. 25 °C mit 108,0 g Diisoundecylphthalat, 16,7 g 3-(2-Aminoethyl)-aminopropyltrimethoxysilan, 16,7 g Phenylaminomethyl-trimethoxysilan und 328 g gefällter und getrockneter Kreide (Wassergehalt < 300 ppm) versetzt und innerhalb 0,5 h in einem Laborplanetenmischer zu einer standfesten Paste verarbeitet. Letztlich werden 2,0 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 9 (Vergleichsbeispiel):

500 g α,ω-Aminopropylpolydimethylsiloxan mit einem mittleren Molekulargewicht von 15 000 g/mol werden in einem beheizbaren mit Vakuumpumpe versehenen Laborplanetenmischer auf 80 °C erwärmt und 0,5 h im Vakuum ausgezeizt. Nach Abkühlung auf 30 - 35 °C werden 16,4 g Isocyanatopropyl-trimethoxysilan (erhältlich von CK-Witco unter Silquest® Y-5187) zugegeben und weiter 30 min. gerührt. Das so erhaltene silanterminierte Polymer wird bei ca. 25 °C mit 230 g eines trimethylsilylterminierten Polydimethylsiloxans mit einer Viskosität von 100 Pas, 16,7 g 3-(2-Aminoethyl)-aminopropyltrimethoxysilan, 16,7 g Vinyltrimethoxysilan und 85 g einer hydrophilen pyrogenen Kieselsäure (erhältlich von der Wacker-Chemie-GmbH unter HDK®-V15) versetzt und innerhalb 0,5 h zu einer standfesten Paste verarbeitet. Letztlich werden 0,75 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 10:

Ein nach Beipiel 8 hergestelltes silanterminiertes Polymer wird bei ca. 25 °C mit 230 g eines trimethylsilylterminierten Polydimethylsiloxans mit einer Viskosität von 100 Pas, 16,7 g 3-(2-Aminoethyl)-aminopropyltrimethoxysilan, 16,7 g Methoxymethyl-trimethoxysilan und 85 g einer hydrophilen pyrogenen Kieselsäure versetzt und innerhalb 0,5 h zu einer standfesten Paste verarbeitet. Letztlich werden 0,75 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 11:

Ein nach Beipiel 8 hergestelltes silanterminiertes Polymer wird bei ca. 25 °C mit 230 g eines trimethylsilylterminierten Polydimethylsiloxans mit einer Viskosität von 100 Pas, 16,7 g 3-(2-Aminoethyl)-aminopropyltrimethoxysilan, 33,4 g Methoxymethyl-trimethoxysilan und 85 g einer hydrophilen pyrogenen Kieselsäure versetzt und innerhalb 0,5 h zu einer standfesten Paste verarbeitet. Letztlich werden 0,75 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 12:

Ein nach Beipiel 8 hergestelltes silanterminiertes Polymer wird bei ca. 25 °C mit 230 g eines trimethylsilylterminierten Polydimethylsiloxans mit einer Viskosität von 100 Pas, 16,7 g 3-(2-Aminoethyl)-aminopropyltrimethoxysilan, 16,7 g Phenylaminomethyl-trimethoxysilan und 85 g einer hydrophilen pyrogenen Kieselsäure versetzt und innerhalb 0,5 h zu einer standfesten Paste verarbeitet. Letztlich werden 0,75 g Dibutylzinndilaurat als Katalysator 10 min. eingemischt.
Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 13 (Vergleichsbeispiel):

400 g eines Polypropylenglykols mit einem mittleren Molekulargewicht von 8000 g/mol werden mit 23,0 g Isophorondiisocyanat bei 100 °C innerhalb von 60 min. polymerisiert. Das erhaltene Polyurethanpräpolymer wird anschließend auf 60 °C abgekühlt und mit 10,5 g Phenylaminomethyl-trimethoxysilan versetzt und 60 min gerührt, bis im IR-Spektrum keine Isocyanatbande mehr zu sehen ist.
Das so erhaltene silanterminierte Polymer wird bei ca. 25 °C mit 155 g Diisoundecylphthalat, 21,0 g 3-(2-Aminoethyl)-aminopropyltrimethoxysilan, 21,0 g Vinyltrimethoxysilan und 435 g gefällter und getrockneter Kreide (Wassergehalt < 300 ppm) versetzt und in einem Laborplanetenmischer zu einer standfesten Paste verarbeitet. Das Produkt geliert bereits bei der Einarbeitung der Füllstoffe.

### Beispiel 14 (Vergleichsbeispiel) :

Ein nach Beispiel 13 hergestelltes silanterminiertes Polymer wird wie dort beschrieben compoundiert, unter Verwendung von 63,0 g Vinyltrimethoxysilan. Das Produkt konnte im Laborplanetenmischer noch zu einer standfesten Paste verarbeitet werden, ist jedoch bei der Herstellung der Prüfkörper spontan ausgehärtet.

### Beispiel 15 (Vergleichsbeipiel):

400 g eines Polypropylenglykols mit einem mittleren Molekulargewicht von 8000 g/mol werden mit 12,5 g Isophorondiisocyanat bei 100 °C innerhalb von 60 min. polymerisiert. Das erhaltene Polyurethanpräpolymer wird anschließend auf 60 °C abgekühlt und mit 19,7 g Isocyanatomethyltrimethoxysilan versetzt und 60 min gerührt, bis im IR-Spektrum keine Isocyanatbande mehr zu sehen ist.

Das so erhaltene silanterminierte Polymer wird bei ca. 25 °C mit 155 g Diisoundecylphthalat, 21,0 g 3-(2-Aminoethyl)-aminopropyltrimethoxysilan, 21,0 g Vinyltrimethoxysilan und 435 g gefällter und getrockneter Kreide (Wassergehalt < 300 ppm) versetzt und in einem Laborplanetenmischer zu einer standfesten Paste verarbeitet. Das Produkt geliert bereits bei der Einarbeitung der Füllstoffe.

### Beispiel 16:

Ein nach Beispiel 13 hergestelltes silanterminiertes Polymer wird bei ca. 25 °C mit 155 g Diisoundecylphthalat, 21,0 g 3-(2-Aminoethyl)-aminopropyltrimethoxysilan, 21,0 g Methoxymethyltrimethoxysilan und 435 g gefällter und getrockneter Kreide (Wassergehalt < 300 ppm) versetzt und in einem Laborplanetenmischer zu einer standfesten Paste verarbeitet. Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 17:

Ein nach Beipiel 13 hergestelltes silanterminiertes Polymer wird bei ca. 25 °C mit 155 g Diisoundecylphthalat, 21,0 g 3-(2-Aminoethyl)-aminopropyltrimethoxysilan, 42,0 g Methoxymethyl-trimethoxysilan und 435 g gefällter und getrockneter Kreide (Wassergehalt < 300 ppm) versetzt und in einem Laborplanetenmischer zu einer standfesten Paste verarbeitet. Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 18:

Ein nach Beipiel 13 hergestelltes silanterminiertes Polymer wird bei ca. 25 °C mit 155 g Diisoundecylphthalat, 21,0 g 3-(2-Aminoethyl)-aminopropyltrimethoxysilan, 21,0 g Phenylaminomethyl-trimethoxysilan und 435 g gefällter und getrockneter Kreide (Wassergehalt < 300 ppm) versetzt und in einem Laborplanetenmischer zu einer standfesten Paste verarbeitet. Die Hautbildungszeiten (Tack-free-time), die Durchhärtung und die Lagerstabilität wird wie oben beschrieben bestimmt. Die Kennwerte des Produkts sind in Tabelle 1 zusammengestellt.

### Beispiel 19:

Ein nach Beipiel 15 hergestelltes silanterminiertes Polymer wird bei ca. 25 °C mit 155 g Diisoundecylphthalat, 21,0 g 3-(2-Aminoethyl)-aminopropyltrimethoxysilan, 42,0 g Methoxymethyl-trimethoxysilan und 435 g gefällter und getrockneter Kreide (Wassergehalt < 300 ppm) versetzt und in einem Laborplanetenmischer zu einer standfesten Paste verarbeitet. Die Hautbildungszeiten (Tack-free-time), die Durchhärtung und die Lagerstabilität wird wie oben beschrieben bestimmt. Die Kennwerte des Produkts sind in Tabelle 1 zusammengestellt.

**Tablelle 1:**

| **Härtungscharakteristik und Lagerstabilität der feuchtigkeitshärtenden Massen** | | | | | |
|---|---|---|---|---|---|
| **Beispiel** | **Haut (tack- free) [min]** | **Duzchhärtung [mm/d]** | **Haut 4d/60°C (tack- free)[min]** | **Durchhärtung 4d/60°C [mm/d]** | **Lagerstabilität (Bemerkung)** |
| **Bsp. 1 (Vergl.)** | 60 | 2-3 | 35 | 2 | Paste deutlich viskoser |
| **Bsp. 2** | 40 | 3 | 40 | 2-3 | Paste etwas viskoser |
| **Bsp. 3** | 45 | 3 | 40 | 3 | Paste unverändert |
| **Bsp. 4** | 50 | 2-3 | 45 | 2-3 | Paste unverändert |
| **Bsp. 5 (Vergl.)** | 70 | 3-4 | 45 | 2-3 | Paste deutlich viskoser |
| **Bsp. 6** | 60 | 3-4 | 55 | 3-4 | Paste unverändert |
| **Bsp. 7** | 65 | 3-4 | 65 | 3-4 | Paste unverändert |
| **Bsp. 8** | 65 | 3-4 | 55 | 4 | Paste etwas viskoser |
| **Bsp. 9 (Vergl.)** | 15 | 5-6 | 5 | 10-12 | Paste deutlich viskoser |
| **Bsp. 10** | 15 | 6-7 | 10 | 6-7 | Paste etwas viskoser |
| **Bsp. 11** | 15 | 6-7 | 15 | 6-7 | Paste unverändert |
| **Bsp. 12** | 15 | 6-7 | 15 | 6-7 | Paste unverändert |
| **Bsp. 16** | 4 | > 15 | 3 | > 15 | Paste etwas viskoser |
| **Bsp. 17** | 7 | > 15 | 6 | > 15 | Paste unverändert |
| **Bsp. 18** | 4 | > 15 | 3 | > 15 | Paste etwas viskoser |
| **Bsp. 19** | 6 | > 15 | 5 | > 15 | Paste unverändert |

### Beispiel 20:

500 g eines α,ω-OH-terminierten Polypropylenglykols mit einem mittleren Molekulargewicht von 12000 g/mol werden mit 17,7 g Isocyanatomethyl-trimethoxysilan bei 90 °C innerhalb von 60 min. unter Zugabe von 130 mg Dibutylzinndilaurat umgesetzt. Der so erhaltene silanterminierte Polyether wird mit weiteren 10,5 g eines Silans (siehe Tabelle 2) versetzt und an Luft gelagert. Die Viskosität des Polymers wird als Funktion der Zeit bestimmt.
In Abhängigkeit von zugesetzten Silan beobachtet man eine unterschiedlich schnelle Zunahme der Viskosität an Luft durch Kondensation des Polymers mittels Luftfeuchtigkeit, wobei die erfindungsgemäß eingesetzten Silane zu einer deutlich höheren Stabilisierung des Polymers führen.

**Tabelle 2:**

| **Viskositätszunahme eines silantermierten Polyether unter Einwirkung von Luftfeuchtigkeit in Abhängigkeit vom eingesetzten Silan (je 2,0 Gew.-%)** | | | | |
|---|---|---|---|---|
| Viskosität [Pas] | | | | |
| Zeit [Tage] | 0 | 1 | 2 | 3 |
| Methylcarbamatomethyltrimethoxysilan | 12 | 11 | 14 | 24 |
| Methoxymethyltrimethoxy-silan | 12 | 13 | 19 | 30 |
| Vinyl-trimethoxysilan (nicht erfindungsgemäß) | 12 | 15 | 30 | 45 (Hautbildung) |
| Methyl-trimethoxysilan (nicht erfindungsgemäß) | 13 | 19 | 47 (Hautbildung) | - |
| ohne Zusatz | 13 | 26 | 53 (Hautbildung) | - |

## Patentansprüche

1. Alkoxyvernetzende einkomponentige Massen, die
(A) alkoxysilanterminiertes Polymer mit Endgruppen der allgemeinen Formel (1)
-A-Si(R)ₐ(CH₃)₃₋ₐ (1)
und
(B) Silan, das ausgewählt wird aus Silanen der allgemeinen Formeln (2) bis (4)
X-CH₂-Si(R)ₐ(CH₃)₃₋ₐ (2)
R''N[CH₂-Si(R)ₐ(CH₃)₃₋ₐ]₂ (3)
N[CH₂-Si(R)ₐ(CH₃)₃₋ₐ]₃ (4)
enthalten, wobei
**A** ein zweibindiger gegebenenfalls halogensubstuierter Kohlenwasserstoffrest mit 1 bis 18 C-Atomen,
**R** eine Methoxy- oder Ethoxygruppe,
**X** eine Gruppe R''O-, R''NH- oder Halogen,
**R''** Wasserstoff, einen gegebenenfalls halogensubstuierten cyclischen, linearen oder verzweigten C₁₋₁₈-Alkyl- oder C₆₋₁₈-Arylrest, oder ein Rest R'-O-CO- oder R'-NH-CO-,
**R'** einen gegebenenfalls halogensubstuierten C₁₋₈-Kohlenwasserstoffrest und
**a** eine ganze Zahl von 1 bis 3 bedeuten.

2. Massen nach Anspruch 1, bei denen das alkoxysilanterminierte Polymer (A) Endgruppen der allgemeinen Formel (7),
-NR¹-CH₂-Si(R)ₐ(CH₃)₃₋ₐ (7)
aufweist, wobei
**R**^{**1**} Wasserstoff oder einen gegebenenfalls mit Halogen substituierten Alkylrest mit 1 bis 18 C-Atomen, oder Arylrest mit 6 bis 18 C-Atomen bedeutet und
**R** und **a** die die in Anspruch 1 angegebenen Bedeutungen aufweisen.

3. Massen nach Anspruch 1 oder 2, welche auf 100 Gewichtsteile Polymer (A) 0,1 bis 20 Gewichtsteile Silane (B) enthalten.

4. Massen nach Anspruch 1 bis 3, welche als Komponente (C) einen Katalysator zur Aushärtung enthalten.

5. Massen nach Anspruch 1 bis 4, bei denen die Polymere (A) ein Grundgerüst aufweisen, das ausgewählt wird aus Polyurethan , Polyether, Polyester, Polyacrylat, Polyvinylester, Ethylen-Olefincopolymer, Styrol-Butadiencopolymer und Polyolefin.

6. Massen nach Anspruch 1 bis 4, bei denen die Polymere (A) ein Grundgerüst aus Polydiorganosiloxan aufweisen.

## Claims

1. Alkoxy-crosslinking one-component materials which comprise
(A) alkoxysilane-terminated polymer having terminal groups of the general formula (1)
-A-Si(R)ₐ(CH₃)₃₋ₐ (1)
and
(B) silane which is selected from silanes of the general formulae (2) to (4)
X-CH₂-Si(R)ₐ(CH₃)₃₋ₐ (2)
R''N[CH₂-Si(R)ₐ(CH₃)₃₋ₐ]₂ (3)
N[CH₂-Si(R)ₐ(CH₃)₃₋ₐ]₃ (4)
in which
**A** is a divalent optionally halogen-substituted hydrocarbon radical having 1 to 18 C atoms,
**R** is a methoxy or ethoxy group,
**X** is an R''O- or R''NH- group or halogen,
**R''** is hydrogen, an optionally halogen-substituted cyclic, linear or branched C₁₋₁₈-alkyl or C₆₋₁₈-aryl radical, or an R'-O-CO- or R'-NH-CO- radical,
**R'** is an optionally halogen-substituted C₁₋₈-hydrocarbon radical and
**a** is an integer from 1 to 3.

2. Materials according to Claim 1, in which the alkoxysilane-terminated polymer (A) has terminal groups of the general formula (7)
-NR¹-CH₂-Si(R)ₐ(CH₃)₃₋ₐ (7)
in which
**R**^{**1**} is hydrogen or an optionally halogen-substituted alkyl radical having 1 to 18 C atoms or an aryl radical having 6 to 18 C atoms and
**R** and **a** have the meanings stated in Claim 1.

3. Materials according to Claim 1 or 2, which contain from 0.1 to 20 parts by weight of silanes (B) per 100 parts by weight of polymer (A).

4. Materials according to any of Claims 1 to 3, which contain, as component (C), a catalyst for curing.

5. Materials according to any of Claims 1 to 4, in which the polymers (A) have a skeleton which is selected from polyurethane, polyether, polyester, polyacrylate, polyvinyl ester, ethylene/olefin copolymer, styrene/butadiene copolymer and polyolefin.

6. Materials according to any of Claims 1 to 4, in which the polymers (A) have a skeleton comprising polydiorganosiloxane.

## Revendications

1. Pâtes à un composant réticulant par alcoxy, qui contiennent :
(A) un polymère à terminaisons alcoxysilane qui présente des groupes terminaux de formule générale (1)
-A-Si(R)ₐ(CH₃)₃₋ₐ (1)
et
(B) un silane qui est sélectionné parmi les silanes des formules générales (2) à (4)
X-CH₂-Si(R)ₐ(CH₃)₃₋ₐ (2)
R"N[CH₂-Si(R)ₐ(CH₃)₃₋ₐ]₂ (3)
N[CH₂-Si(R)ₐ(CH₃)₃₋ₐ]₃ (4)
dans lesquelles
A représente un radical hydrocarboné qui compte de 1 à 18 atomes de carbone, à doubles liaisons et éventuellement halogéné,
R représente un groupe méthoxy ou éthoxy,
X représente un groupe R"O-, R"NH- ou un halogène,
R" représente l'hydrogène, un radical alkyle en C₁ à C₁₈ ou aryle en C₆ à C₁₈ cycliques, linéaires ou ramifiés, éventuellement halogénés, ou un radical R'-O-CO- ou R'-NH-CO-;
R' représente un radical hydrocarboné en C₁ à C₈ éventuellement halogéné et
a représente un nombre entier compris entre 1 et 3.

2. Pâtes selon la revendication 1, dans lesquelles le polymère (A) à terminaisons alcoxysilane contient des groupes terminaux de formule générale (7),
-NR¹-CH₂-Si(R)ₐ(CH₃)₃₋ₐ
dans laquelle
R¹ représente l'hydrogène ou un radical alkyle qui compte de 1 à 18 atomes de C, éventuellement halogéné, ou un radical aryle qui compte de 6 à 18 atomes de C et
R et a ont les significations indiquées en revendication 1.

3. Pâtes selon la revendication 1 ou 2, qui contiennent de 0,1 à 20 parties en poids des silanes (B) pour 100 parties en poids de polymère (A).

4. Pâtes selon les revendications 1 à 3, qui contiennent comme composant (C) un catalyseur de durcissement.

5. Pâtes selon les revendications 1 à 4, dans lesquelles les polymères (A) présentent un squelette de base qui est sélectionné parmi les polyuréthanes, les polyéthers, les polyesters, les polyacrylates, les poly(esters de vinyle), les copolymères d'éthylène et d'oléfine, les copolymères de styrène et de butadiène et les polyoléfines.

6. Pâtes selon les revendications 1 à 4, dans lesquelles les polymères (A) présentent un squelette de base de polydiorganosiloxane.
